# NEUE EUROPÄISCHE PATENTSCHRIFT

(11) **EP 0 733 293 B2**
(45) Veröffentlichungstag und Bekanntmachung des Hinweises auf die Entscheidung über den Einspruch: **25.07.2001**
(45) Hinweis auf die Patenterteilung: 11.11.1998
(21) Anmeldenummer: 95902130.4
(22) Anmeldetag: 06.12.1994
(51) Int. Cl.: H04N 5/21, H04N 17/00

(54) **RAUSCHPEGELBESTIMMUNGSVERFAHREN UND RAUSCHPEGELDETEKTOR**
PROCESS FOR DETERMINING NOISE LEVEL AND NOISE LEVEL DETECTOR
PROCEDE DE DETERMINATION DU NIVEAU DE BRUIT ET DETECTEUR DU NIVEAU DE BRUIT

(30) Priorität: 08.12.1993 DE 4341760
(43) Veröffentlichungstag der Anmeldung: 25.09.1996
(73) Patentinhaber: Interessengemeinschaft für Rundfunkschutzrechte GmbH Schutzrechtsverwertung & Co. KG., D-40210 Düsseldorf (DE)
(72) Erfinder: HENTSCHEL, Christian, D-38106 Braunschweig (DE)
(74) Vertreter: Eichstädt, Alfred, Dipl.-Ing.
(86) Internationale Anmeldenummer: EP9404060
(87) Internationale Veröffentlichungsnummer: WO9516324

(56) Entgegenhaltungen:
- US-A- 4 249 209
- US-A- 4 991 021
- IEEE Transactions on Consumer Electronics, Vol. 34, No. 3, August 1988, Thomas Grafe und Guenter Scheffler:"INTERFIELD NOISE AND CROSS COLOR REDUCTION IC FOR FLICKER FREE TV RECEIVERS"
- Scheffler: "Siemens, Picture Processor, System Specification", 1987
- Limann, Pelka: Fernsehtechnik ohne Ballast, 14. Auflage, Franzis-Verlag, München, 1983

## Beschreibung

Die vorliegende Erfindung betrifft ein Rauschpegelbestimmungsverfahren für ein Videosignal, wobei das Videosignal aus einer Folge von Videobildern besteht, wobei jedes Videobild aus einer Vielzahl von vertikal untereinander angeordneten Videozeilen besteht, wobei jede Videozeile aus einer Vielzahl von horizontal nebeneinander angeordneten Bildpunkten besteht, wobei das Videosignal für jeden Bildpunkt ein Sollsignal aufweist, dem ein Rauschsignal überlagert ist, sowie den zugehörigen Rauschpegeldetektor.

Zur Rauschmessung in Bildern kann in einem Bildbereich mit wenig Aktivität, d.h. in einem Bereich, der einen praktisch konstanten Grauwert aufweist, in einem vorgegebenen Fenster der Rauschanteil bestimmt werden. Dies ist jedoch sehr umständlich. Daher wird häufig auf die Austastlücke zugegriffen, in welcher der Nutzsignalverlauf bekannt ist. Andere Methoden wiederum bestimmen den Rauschanteil im Signalspektrum, da insbesondere weißes Rauschen sich im Spektrum wie ein Teppich dem Nutzsignal überlagert und so vom Nutzsignal im allgemeinen einfach unterschieden werden kann.

Aus der EP 0 004 728-A2 ist ein Verfahren zur automatischen Messung des Rauschpegels sowie der zugehörige Rauschpegeldetektor bekannt. Gemäß dieser Schrift wird das Ausgangssignal eines Verarbeitungsschaltkreises zeitlich um Bilddauem verzögert und einem Subtraktionsschaltkreis zugeführt, dem ferner das Videosignal zugeführt ist. Das so gebildete Differenzsignal wird gleichgerichtet und tiefpaßgefiltert. Der Rauschpegel dieses tiefpaßgefilterten Signals wird bestimmt und beeinflußt die Abschwachung eines Abschwachungsschaltkreises, dessen Ausgangssignal zu dem Ausgangssignal des Verarbeitungsschaltkreises addiert wird. Das so gebildete Signal stellt dann das neue Ausgangssignal des Verarbeitungsschaltkreises dar.

Dieses Verfahren ist aufwendig und kompliziert. Ferner besteht aufgrund der Rückkopplung des Ausgangssignals des Verarbeitungsschaltkreises die Gefahr von Instabilitäten.

Aus der Zeitschrift IEEE Transactions on Consumer Electronics, Vol. 34, No. 3, AUGUST 1998, Seiten 402-408, ist es bereits bekannt, während der Vertikalaustastlücken den Rauschanteil eines Eingangssignals zu messen, wobei nur Rauschanteile erfasst werden, die ihren Ursprung auf dem Fernsehübertragungskanal haben. Dabei wird das Eingangssignal hochpassgefiltert, dann erfolgt eine Absolutwertbildung und Begrenzung. Die Auswertung erfolgt unter Verwendung von 16 Vertikalaustastintervallen, aus denen jeweils 256 Pixels genommen und aufakkumuliert werden.

Aus einer Druckschrift der Fa. Siemens mit der Bezeichnung Picture Processor - System Specification vom 09.12.87 ist ebenfalls ein Algorithmus bekannt, mittels dessen ein Maß für den Rauschanteil eines Video-Signals abgeleitet wird. Auch bei diesem Algorithmus werden Abtastwert aus Schwarzzeilen verschiedener aufeinanderfolgender vertikaler Austastlücken nach Hochpassfilterung und Betragsbildung aufaddiert und ausgewertet. Weiterhin ist in dieser Druckschrift angegeben, dass aus mindestens 16 V-Lücken Signalwerte akkumuliert werden müssen, damit die Schaltung stabil und störsicher arbeitet.

Die Aufgabe der vorliegenden Erfindung besteht darin, ein Rauschpegelbestimmungsverfahren und den zugehörigen Rauschpegeldetektor zur Verfügung zu stellen, mittels derer eine einfache, kostengünstige und stabile Rauschpegelbestimmung möglich ist.

Die Aufgabe wird durch ein Verfahren mit den in den Ansprüchen 1 bzw. 2 angegebenen Merkmalen gelöst.

Ein Rauschpegeldetektor gemäß der Erfindung ist Gegensland des Anspruchs 9.

Mit dem erfindungsgemäßen Verfahren bzw dem zugehörigen Detektor kann automatisch - auch innerhalb des Bildes - der Rauschpegel gemessen werden. Gleichzeitig ist die Schaltung mit nur geringem Aufwand verbunden. Die Schaltung wird vorzugsweise bei der Rauschreduktion eingesetzt, also dann, wenn rausch. abhängig Systemparameter einer ubergeordneten Schaltung verändert werden sollen.

In den meisten Bildern kann davon ausgegangen werden, daß es Bereiche mit geringen Strukturen gibt, in denen also z.B. ein konstanter Grauwert überwiegt. In diesen Bereichen tritt lediglich Rauschen auf, das einfach gemessen werden kann.

Das Verfahren und die zugehörige Schaltung sind dann besonders einfach, wenn die Meßprobe eindimensional ausgebildet ist, insbesondere wenn die Bildpunkte der Meßprobe nebeneinander angeordnet sind. Die Meßprobe kann aber auch zwei- oder dreidimensional ausgebildet sein. Die Bildpunkte der Meßprobe können also beispielsweise neben- und untereinander angeordnet sein. Es ist aber auch möglich, daß sich das Meßfenster bzw. die Meßprobe z.B. in horizontaler und zeitlicher oder in vertikaler und zeitlicher Richtung erstreckt.

Zur Eliminierung des Gleichanteils wird ein Hochpaß verwendet. Das Maß für die Rauschaktivitat kann aus dem hochpaßgefilterten Signal auf verschiedene Weise ermittelt werden. Es kann beispielsweise der Betrag der maximalen Differenzamplitude oder die Summe der quadrierten Differenzamplituden bestimmt werden. Vorteilhafterweise wird jedoch die Betragssumme der Differenzamplituden zur Bestimmung des Rauschpegels herangezogen. Der Aufwand dieser Schaltung ist kaum höher als der Aufwand zur Bestimmung der maximalen Differenzamplitude und erheblich geringer als der schaltungstechnische Aufwand zur Bestimmung der Summe der quadrierten Differenzamplituden. Andererseits ist die Genauigkeit fast ebenso gut wie bei der Summe der quadrierten Differenzamplituden.

Das Ergebnis ist eine Meßprobe, die in der Regel, d.h. bei zufälliger Wahl des Meßfensters, stark vom Nutzsignal abhängig ist. Der so gewonnene Wert wird also innerhalb von strukturierten Bereichen aufgrund der Variation des Nutzsignals groß und nur in unstrukturierten Gebieten klein sein. Vorzugsweise werden daher mehrere Meßproben ausgewählt, wobei pro Meßprobe ein eigener Rauschpegel bestimmt wird. Als wirksamer Rauschpegel wird dann der kleinste der eigenen Rauschpegel verwendet.

Die Genauigket des Ergebnisses kann erhöht werden, wenn aus mehrere Meßproben die Proben mit dem kleinsten eigenen Rauschpegels ausgewählt und als wirksamer Rauschpegel ein - gegebenenfalls gewichteter- Mittelwert der eigenen Rauschpegel bestimmt wird. Diese Vorgehensweise wird insbesondere dann zu guten Ergebnissen führen, wenn hierdurch das obenstehend beschriebene Verfahren zum Bestimmen der Meßprobe mit dem minimalen Rauschsignal ergänzt wird.

Das Verfahren und der Rauschpegeldetektor werden vorzugsweise in einer Verarbeitungsschaltung für das Videosignal zur Steuerung der Kennlinie der Verarbeitungsschaltung verwendet.

Weitere Vorteile und Einzelheiten ergeben sich aus der nachfolgenden Beschreibung eines Ausführungsbeispiels, anhand der Figuren sowie in Verbindung mit den weiteren Ansprüchen.

Dabei zeigen:
- Fig. 1: das Prinzip der Rauschpegelbestimmung
- Fig. 2: die einzelnen Verfahrensschritte der Rauschpegelbestimmung,
- Fig. 3: ein Blockschaltbild eines Rauschpegeldetektors und
- Fig. 4: die Anwendung des Rauschpegeldetektors in einem rauschgesteuerten Detaildetektor

Mittels eines Videosignals wird üblicherweise nacheinander eine Folge von Videobildern übertragen. Jedes Videobild besteht aus einer Vielzahl von vertikal untereinander angeordneten Videozeilen, die ihrerseits wiederum jeweils aus einer Vielzahl von horizontal nebeneinander angeordneten Bildpunkten bestehen. Idealerweise weist das Videosignal für jeden Bildpunkt lediglich ein Sollsignal auf. In der Praxis ist dem Sollsignal jedoch fast immer auch ein Rauschsignal mit einem mittleren Rauschpegel überlagert. Die Bestimmung dieses Rauschpegels ist Gegenstand der vorliegenden Erfindung.

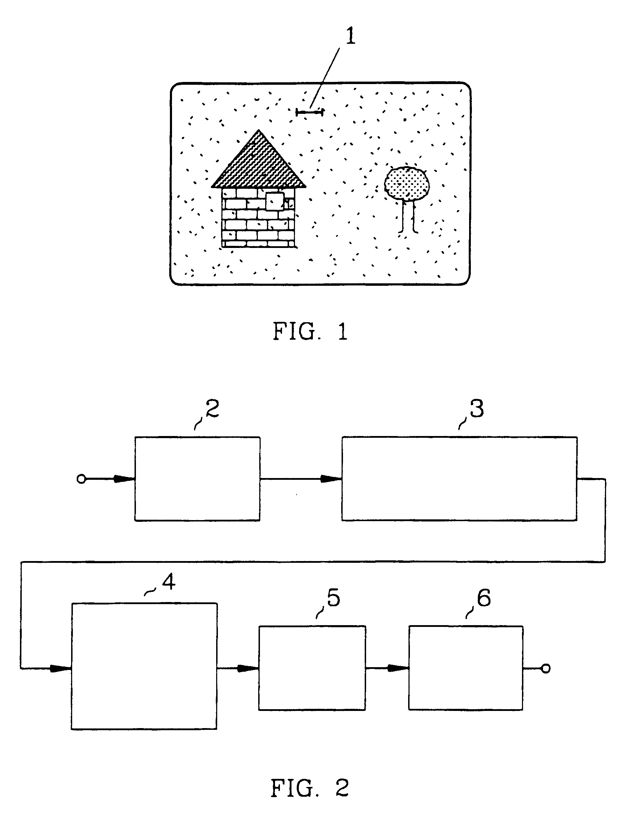

Wie in Fig. 1 dargestellt, weist ein Videobild im Regelfall mehrere Bereiche auf, innerhalb derer das Videosignal nur unwesentlich variiert. Um den Rauschpegel bestimmen zu können, ist es also im Prinzip lediglich nötig, innerhalb einer geeignet gewählten Meßprobe 1 den Rauschpegel zu bestimmen.

Hierzu wird das Videosignal gemäß Fig. 2 zunächst im Block 2 hochpaßgefiltert. Sodann wird im Block 3 für mehrere Meßproben sequentiell der Rauschpegel bestimmt. Jeder Meßprobe 1 wird also ein eigener, meßprobenspezifischer Rauschpegel zugeordnet. Innerhalb von strukturierten Bereichen des Bildes wird der so gewonnene Wert groß sein. Nur in unstrukturierten Gebieten entspricht der Wert dem Rauschpegel. In rauschfreien Bildern strebt der Wert sogar gegen Null. Daher werden anschließend im Block 4 die kleinsten Rauschpegel ausgewählt. Die Anzahl der auszuwählenden Rauschpegel ist dabei fest vorgegeben, z.B. 5 oder 10. Ebenso ist vorgegeben, innerhalb welcher Zeitdauer die Meßproben genommen werden. Die Zeitdauer kann z.B. eine Bildperiode sein. Die im Block 5 ermittelten Mittelwerte werden dann gemäß Block 6 tiefpaßgefiltert, um weiche zeitliche Übergänge zu gewährleisten. Nach Abarbeitung des Blocks 6 steht dann der Rauschpegel als Spannung zur Verfügung.

Die Bestimmung des Rauschpegels in Block 3 kann beispielsweise dadurch erfolgen, daß der Betrag des hochpaßgefilterten Videosignals gebildet wird und die Amplitudensumme über einen kurzen Zeitraum, der z. B. n = 5 oder n = 10 Bildpunkten entspricht, gebildet wird. Unmittelbar danach kann bereits die nächste Meßprobe 1 gebildet werden.

Eine Beschränkung auf das aktive Bildfenster kann sinnvoll sein, wenn das Bildmaterial ein anderes Rauschsignal aufweist als beispielsweise in der Austastlücke vorhanden ist. Je nach Anwendung kann aber die Beschränkung der Meßproben 1 auf das aktive Bildfenster entfallen.

Eine Verkopplung mit dem Synchronisationssignal des Videosignals ist dann nicht erforderlich. Dadurch wird die Messung unabhängig von einer Videonorm. Darüber hinaus werden auch in den Austastlücken des Videosignals Meßproben 1 gebildet.

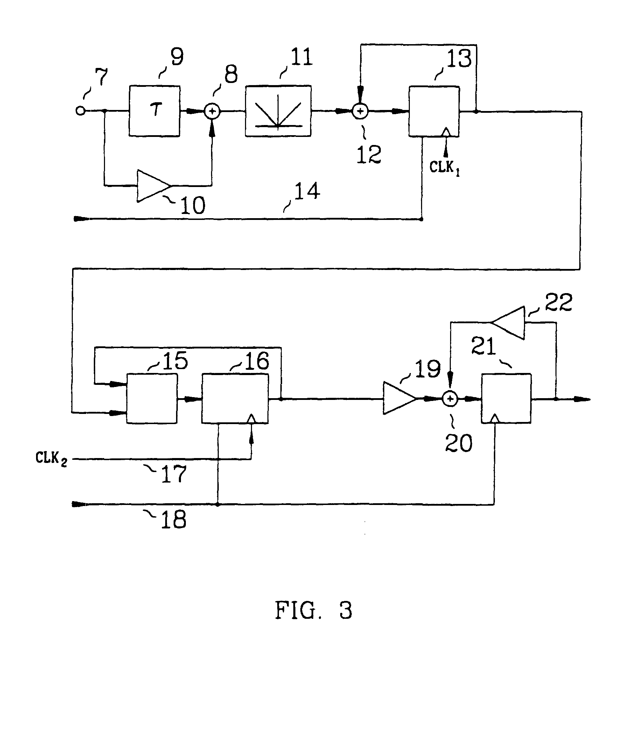

Fig. 3 zeigt eine Schaltung zur Realisierung des anhand Fig. 2 beschriebenen Verfahrens. Das Videosignal wird an der Einspeisestelle 7 in den Rauschpegeldetektor eingespeist. Dort wird es zunächst hochpaßgefiltert. Der Hochpaß besteht im einfachsten Fall aus drei Elementen, nämlich der Summationsstelle 8, der Verzögerungseinheit 9 und dem Verstärker 10. Der Verstärker 10 invertiert das ihm zugeführte Videosignal, verstärkt es also mit einem Verstärkungsfaktor von -1. Die Verzögerungseinheit 9 verzögert das ihr zugeführte Videosignal, laßt es aber ansonsten unverändert. Die Verzögerung τ₁ der Verzögerungseinheit 9 kann im einfachsten Fall der Verzögerung von einem Bildpunkt entsprechen. In diesem Fall ist die Meßprobe 1 also eindimensional ausgebildet, wobei die Bildpunkte der Meßprobe 1 nebeneinander angeordnet sind. Es sind aber auch andere Verzögerungswerte, z.B. die Zeit, die einer Videozeile entspricht, denkbar.

Es ist auch möglich, komplexere Auswahlverfahren anzuwenden. Insbesondere ist es auch möglich, die Meßprobe 1 zweidimensional zu wählen. Insbesondere kann die Meßprobe 1 eine Gruppe von z.B. 5 x 5 oder 10 x 10 neben- und untereinander angeordneten Bildpunkten eines Videobildes sein.

Das Ausgangssignal der Summationsstelle 8 ist das hochpaßgefilterte oder differenzierte Videosignal. Dieses Signal wird im Betragsbildner 11 gleichgerichtet und über die Summationsstelle 12 einem Register 13 zugeführt. Der Summationsstelle 12 wird als zweites Eingangssignal das Ausgangssignal des Registers 13 zugeführt. Das Register 13 bildet also die Betragssumme der Differenzamplituden des hochpaßgefilterten Videosignals. Hierzu wird dem Register 13 ein Taktsignal CLK₁ zugeführt, das mit der Verzögerungszeit τ₁ der Verzögerungseinheit 9 korrespondiert. Die Auswahl der Meßprobe 1 erfolgt dann dadurch, daß dem Register 13 von Zeit zu Zeit über die Leitung 14 ein Resetsignal zugeführt wird. Immer beim Zuführen des Resetsignals wird das Register 13 auf den Wert Null zurückgesetzt. Das getaktete Register 13 wirkt also einerseits als Auswahlschaltung zur Auswahl der Meßprobe 1, da nach jedem Resetsignal eine neue Meßprobe 1 beginnt. Andererseits wirkt das Register 13 auch als Auswerteschaltung zur Bestimmung des Rauschpegels, da es die Beträge der Differenzsignale aufsummiert und so den Rauschpegel der Meßprobe 1 bestimmt.

Das Ausgangssignal des Registers 13 wird dem Vergleicher 15 zugeführt, dem als zweites Eingangssignal das Ausgangssignal des Registers 16 zugeführt wird. Der Vergleicher 15 liefert stets das kleinere seiner beiden Eingangssignale an den Eingang des Registers 16. Unmittelbar bevor dem Register 13 über die Leitung 14 ein Resetsignal zugeführt wird, also wenn der Inhalt des Registers 13 seinen maximalen Wert erreicht hat, wird dem Register 16 über die Leitung 17 ein Meßtakt CLK₂ zugeführt. Das Register 16 übernimmt daraufhin den an seinem Eingang anstehenden, vom Vergleicher 15 gelieferten Wert. Im Ergebnis wird also pro zugeführtem Meßtakt CLK₂ eine Meßprobe 1 gebildet.

Nach einer Zeitdauer **τ**₂, die größer als die Zeitdauer τ₁ ist, wird dem Register 16 über die Leitung 18 ein Resetsignal zugeführt. Das Register 16 wird dadurch auf seinen maximal möglichen Wert gesetzt. Das Register 16 liefert also als Ausgangssignal stets das Minimum der Rauschpegel einer Anzahl von Meßproben 1. Zweckmaßigerweise entspricht die Zeitdauer τ₂ dem Zeitraum, der zur Übertragung eines Teilbildes oder eines Vollbildes erforderlich ist. In diesem Fall werden die Rauschpegel also bildweise bestimmt. Es kann aber auch ein anderer Wert für die Zeitdauer τ₂ gewählt werden.

Das Ausgangssignal des Registers 16 wird über den Verstärker 19 und die Summationsstelle 20 dem Register 21 zugeführt. Als zweites Eingangssignal wird der Summationsstelle 20 über den Verstärker 22 das Ausgangssignal des Registers 21 zugeführt. Der Verstärker 19 verstärkt das ihm zugeführte Signal mit einem Verstärkungsfaktor α, der zwischen Null und Eins liegt. Der Verstärker 22 verstärkt das ihm zugeführte Signal mit einem Verstarkungsfaktor β, der ebenfalls zwischen Null und Eins liegt. Die Summe von α und β beträgt exakt Eins. Es gilt also β = 1-α.

Das Register 21 wird unmittelbar vor dem Setzen des Registers 16 auf seinen maximalen Wert getaktet. Als Ergebnis liefert das Register 21 ein Ausgangssignal, das dem tiefpaßgefilterten Ausgangssignal des Registers 16 entspricht. Die Zeitkonstante der Tiefpaßfilterung ist dabei über die Verstärkung α des Verstärkers 19 einstellbar. Der durch die Verstärker 19, 22, die Summationsstelle 20 und das getaktete Register 21 als Rauschpegel zur Verfügung gestellte Signalpegel stellt also einen gewichteten Mittelwert mehrerer minimaler Meßproben dar.

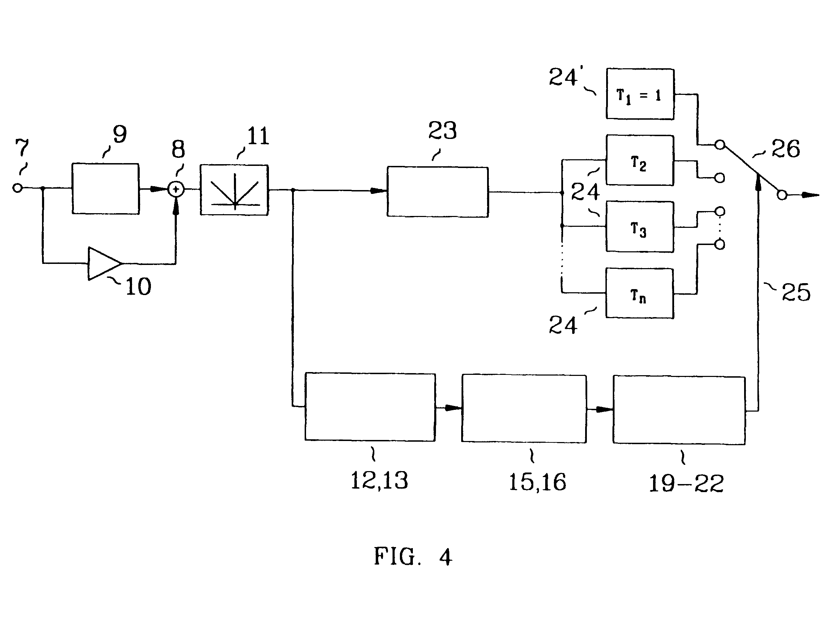

Das Ausgangssignal des Registers 21 stellt das vom Rauschpegeldetektor zur Verfügung gestellte Rauschsignal dar. Dieser Rauschpegel kann dann in anderen Schaltungen, z.B. dem rauschgesteuerten Detaildetektor der Fig. 4, weiterverwendet werden.

Gemäß Fig. 4 besteht der Detaildetektor aus einem Hochpaßfilter mit anschließender Betragsbildung und daran anschließender Tiefpaßfilterung im Tiefpaßfilter 23. Hochpaß und Betragsbildner sind also ebenso vorhanden wie beim Rauschpegeldetektor. Folglich werden diese Blöcke 8 bis 11 gemeinsam genutzt. Der Schaltungsaufwand wird dadurch weiter reduziert.

Das Ausgangssignal des Tiefpasses 23 wird mehreren Kennliniengebern 24 zugeführt. Zusätzlich ist noch ein Kennliniengeber 24' vorhanden, dessen Ausgangskennlinie dann genutzt wird, wenn das vom Rauschpegeldetektor gelieferte Ausgangssignal sehr klein ist, also ein praktisch rauschfreies Signal vorliegt. Das Ausgangssignal des Rauschpegeldetektors wird über die Leitung 25 einem Schalter 26 zugeführt, mittels dessen festgelegt ist, welche der Kennlinien der Kennliniengeber 24, 24' genutzt wird.

Die gewählte Kennlinie kann dann zur Steuerung eines Überblendsignals in einer Videosignalverarbeitungsschaltung genutzt werden. Andererseits ist auch eine einzige Kennlinienbewertung 24 denkbar, die dynamisch in Abhängigkeit vom gemessenen Rauschpegel verändert wird.

## Patentansprüche

1. Rauschpegelbestimmungsverfahren für ein Videosignal,
- wobei das Videosignal aus einer Folge von Videobildern besteht,
- wobei jedes Videobild aus einer Vielzahl von vertikal unter einander angeordneten Videozeilen besteht,
- wobei jede Videozeile aus einer Vielzahl von horizontal nebeneinander angeordneten Bildpunkten besteht,
- wobei das Videosignal für jeden Bildpunkt ein Sollsignal aufweist, dem ein Rauschsignal überlagert ist,
mit folgenden Schritten:
- aus dem Videosignal werden mehrere Meßproben (1) in Form einer Anzahl von Bildpunkten ausgewählt,
- die Meßproben (1) werden einer Hochpaßfilterung unterzogen,
- aus dem hochpaßgefilterten Signal wird pro Meßprobe (1) ein eigener Rauschpegel bestimmt und
- als wirksamer Rauschpegel wird der kleinste der eigenen Rauschpegel verwendet.

2. Rauschpegelbestimmungsverfahren für ein Videosignal,
- wobei das Videosignal aus einer Folge von Videobildern besteht,
- wobei jedes Videobild aus einer Vielzahl von vertikal untereinander angeordneten Videozeilen besteht,
- wobei jede Videozeile aus einer Vielzahl von horizontal nebeneinander angeordneten Bildpunkten besteht,
- wobei das Videosignal für jeden Bildpunkt ein Sollsignal aufweist, dem ein Rauschsignal überlagert ist,
mit folgenden Schritten:
- aus dem Videosignal werden mehrere Meßproben (1) in Form einer Anzahl von Bildpunkten ausgewählt,
- die Meßproben (1) werden einer Hochpaßfilterung unterzogen,
- aus dem hochpaßgefilterten Signal wird pro Meßprobe (1) ein eigener Rauschpegel bestimmt,
- aus diesen eigenen Rauschpegeln werden die kleinsten Rauschpegel ausgewählt, und
- als wirksamer Rauschpegel wird ein - gegebenenfalls gewichteter - Mittelwert der ausgewählten Kleinsten Rauschpegel verwendet.

3. Rauschpegelbestimmungsverfahren nach Anspruch 1 oder 2, **dadurch gekennzeichnet**, daß die Meßprobe (1) eindimensional ausgebildet ist, insbesondere daß die Bildpunkte der Meßprobe (1) nebeneinander angeordnet sind.

4. Rauschpegelbestimmungsverfahren nach Anspruch 1 oder 2, **dadurch gekennzeichnet,**daß die Meßprobe (1) zweidimensional ausgebildet ist, insbesondere daß die Bildpunkte der Meßprobe (1) neben- und untereinander angeordnet sind.

5. Rauschpegelbestimmungsverfahren nach Ansprüch 2 , **dadurch gekennzeichnet**, daß die eigenen Rauschpegel zeitlich nacheinander bestimmt werden, z. B. bildweise, und daß die eigenen Rauschpegel zeitlich tiefpaßgefiltert werden.

6. Rauschpegelbestimmungsverfahren nach einem der Ansprüche 1 bis 5, **dadurch gekennzeichnet**, daß das Videosignal in einer Verarbeitungsschaltung gemäß einer steuerbaren Kennlinie verarbeitet wird und daß der Rauschpegel bzw. der wirksame Rauschpegel die Kennlinie steuert.

7. Rauschpegelbestimmungsverfahren nach einem der vorhergehenden Ansprüche, **dadurch gekennzeichnet**, daß die Rauschpegelbestimmung nur im aktiven Bildteil eines Videobildes erfolgt.

8. Rauschpegelbestimmungsverfahren nach Ansprüch 2 , **dadurch gekennzeichnet**, daß der eigene Rauschpegel durch Auswertung
- der maximalen Differenzamplitude
- durch den Betrag der maximalen Differenzamplituden
- die Betragssumme der Differenzamplituden oder
- die Betragssumme der quadrierten Differenzamplituden ermittelt wird.

9. Rauschpegeldetektor für ein Videosignal,
- wobei das Videosignal aus einer Folge von Videobildern besteht,
- wobei jedes Videobild aus einer Vielzahl von vertikal untereinander angeordneten Videozeilen besteht,
- wobei jede Videozeile aus einer Vielzahl von horizontal nebeneinander angeordneten Bildpunkten besteht,
- wobei das Videosignal für jeden Bildpunkt ein Sollsignal aufweist, dem ein Rauschsignal überlagert ist,
mit folgenden Merkmalen:
- einem Hochpaß zum Hochpaßfiltern des Videosignals,
- einer dem Hochpaß vor- oder nachgeschalteten Auswahlschaltung zur Auswahl mehrerer Meßproben (1) in Form einer Anzahl von Bildpunkten und
- einer Auswerteschaltung, der die hochpaßg filterten Meßproben (1) zur. Bestimmung eines Rauschpegels pro Meßprobe zugeführt werden, wobei die Auswerteschaltung einen Vergleicher (15) zum Bestimmen der Meßprobe (1) mit dem niedrigsten Rauschpegel aufweist.

10. Rauschpegeldetektor nach Anspruch 9, **dadurch gekennzeichnet,**daß die Auswerteschaltung ein Summationselement (12) zum Summieren der hochpaßgefilterten Videosignale der Bildpunkte der Meßprobe (1) aufweist.

11. Rauschpegeldetektor nach Anspruch 9 oder 10, **dadurch gekennzeichnet**, daß der Auswerteschaltung ein Meßtakt (CLK₂) und pro Meßtakt (CLK₂) eine neue Meßprobe (1) zugeführt wird.

12. Rauschpegeldetektor nach einem der Ansprüche 9 bis 11, **dadurch gekennzeichnet**, daß dem Hochpaß ein Betragsbildner (11) nachgeschaltet ist.

13. Rauschpegeldetektor nach einem der Ansprüche 9 bis 12, **dadurch gekennzeichnet**, daß der Hochpaß ein Verzögerungsglied (9) und eine dem Verzögerungsglied (9) nachgeschaltete Summationsstelle (8) aufweist, der zusätzlich zum verzögerten Videosignal auch das unverzögerte invertierte Videosignal zugeführt wird.

14. Rauschpegeldetektor nach einem der Ansprüche 9 bis 13, **dadurch gekennzeichnet,**daß der Auswerteschaltung ein Tiefpaß nachgeschaltet ist.

15. Rauschpegeldetektor nach Anspruch 14, **dadurch gekennzeichnet,**
- daß der Tiefpaß ein getaktetes Speicherelement (21) aufweist,
- daß zwischen der Auswerteschaltung und dem Speicherelement (21) ein erster Verstärker (19) mit einem ersten Verstärkungsfaktor (α) zwischen Null und Eins angeordnet ist,
- daß das Ausgangssignal des Speicherelementes (21) einem zweiten Verstärker (22) mit einem zum ersten Verstärkungsfaktor (α) komplementären zweiten Verstärkungsfaktor (β) zugeführt ist und
- daß die Ausgangssignale der Verstärker (19, 22) dem Speicherelement (21) als Eingangssignal zugeführt sind.

16. Rauschpegeldetektor nach einem der Ansprüche 9 bis 15, **dadurch gekennzeichnet,**
- daß der Rauschpegel bzw. der wirksame Rauschpegel einer Verarbeitungsschaltung für das Videosignal zugeführt ist,
- daß die Verarbeitungsschaltung eines steuerbare Kennlinie aufweist und
- daß der Rauschpegel bzw. der wirksame Rauschpegel die Kennlinie steuert.

## Claims

1. Noise level determination method for a video signal,
- wherein the video signal consists of a series of video images,
- wherein each video image consists of a plurality of video lines arranged vertically one under the other,
- wherein each video line consists of a plurality of pixels arranged horizontally adjacent to one another,
- wherein the video signal has for each pixel a target signal on which a noise signal is superimposed,
comprising the following steps:
- several measurement samples (1) in the form of a number of pixels are selected from the video signal,
- the measurement samples (1) are subjected to a high-pass filtering and
- an individual noise level is determined for each measurement sample (1) from the high-pass filtered signal and
- the lowest of the individual noise levels is used as effective noise level.

2. Noise level determination method for a video signal,
- wherein the video signal consists of a series of video images,
- wherein each video image consists of a plurality of video lines arranged vertically one under the other,
- wherein each video line consists of a plurality of pixels arranged horizontally adjacent to one another,
- wherein the video signal has for each pixel a target signal on which a noise signal is superimposed,
comprising the following steps:
- several measurement samples (1) in the form of a number of pixels are selected from the video signal,
- the measurement samples (1) are subjected to a high-pass filtering,
- an individual noise level is determined for each measurement sample (1) from the high-pass filtered signal,
- the lowest noise levels are selected from these individual noise levels and
- an optionally weighted mean value of the selected lowest noise levels is used as effective noise level.

3. Noise level determination method according to claim 1 or 2, characterised thereby that the measurement sample (1) is one-dimensional, in particular that the pixels of the measurement sample (1) are arranged adjacent to one another.

4. Noise level determination method according to claim 1 or 2, characterised in that the measurement sample (1) is two-dimensional, in particular that the pixels of the measurement sample (1) are arranged adjacent to and below one another.

5. Noise level determination method according to claim 2, characterised in that the individual noise levels are determined successively in time, for example image-wise, and that the individual noise levels are low-pass filtered by time.

6. Noise level determination method according to one of claims 1 to 5, characterised in that the video signal is processed in a processing circuit according to a controllable characteristic curve and that the noise level or the effective noise level controls the characteristic curve.

7. Noise level determination method according to one of the preceding claims, characterised in that the noise level determined is carried out only in the active image part of a video image.

8. Noise level determination method according to claim 2, characterised in that the individual noise level is determined by evaluation
- of the maximum difference amplitude,
- by the amount of the maximum difference amplitudes,
- the amount sum of the difference amplitudes or
- the amount sum of the squared difference amplitudes.

9. Noise level detector for a video signal,
- wherein the video signal consists of a series of video images,
- wherein each video image consists of a plurality of video lines arranged vertically one under the other,
- wherein each video line consists of a plurality of pixels arranged horizontally adjacent to one another,
- wherein the video signal has for each pixel a target signal on which a noise signal is superimposed,
comprising the following features:
- a high-pass for high-pass filtering of the video signal,
- a selector circuit, which is connected in front of or behind the high-pass, for selection of several measurement samples (1) in the form of a number of pixels and
- an evaluating circuit, to which the high-pass filtered measurement samples (1) are fed for determination of a noise level for each measurement sample, wherein the evaluating circuit comprises a comparator (15) for ascertaining the measurement sample (1) with the lowest noise level.

10. Noise level detector according to claim 9, characterised in that the evaluating circuit comprises a summation element (12) for summating the high-pass filtered video signals of the pixels of the measurement sample (1).

11. Noise level detector according to claim 9 or 10, characterised in that a measurement pulse (CLK₂) is fed to the evaluating cycle and a new measurement sample (1) is fed per measurement pulse (CLK₂).

12. Noise level detector according to one of claims 9 to 11, characterised in that an amount forming stage (11) is connected downstream of the high-pass.

13. Noise level detector according to one of claims 9 to 12, characterised thereby that the high-pass comprises a delay element (9) and a summation point (8), which is connected downstream of the delay element (9) and to which, in addition to the delayed video signal, also the undelayed inverted video signal is fed.

14. Noise level detector according to one of claims 9 to 13, characterised in that a low-pass is connected downstream of the evaluating circuit.

15. Noise level detector according to claim 14, characterised in that
- the low-pass comprises a cycled storage element (21),
- a first amplifier (19) with a first amplification factor (α) between zero and one is arranged between the evaluating circuit and the storage element (21),
- the output signal of the storage element (21) is fed to a second amplifier (22) with a second amplification factor (β) complementary to the first amplification factor (α) and
- the output signals of the amplifiers (19, 22) are fed to the storage element (21) as input signal.

16. Noise level detector according to one of claims 9 to 15, characterised in that
- the noise level or the effective noise level is fed to a processing circuit for the video signal,
- the processing circuit has a controllable characteristic curve and
- the noise level or the effective noise level controls the characteristic curve.

## Revendications

1. Procédé de détermination de niveau de bruit pour un signal vidéo, selon lequel
- le signal vidéo est constitué par une suite d'images vidéo,
- chaque image vidéo est constituée par une multiplicité de lignes vidéo disposées verticalement les unes au-dessous des autres,
- chaque ligne vidéo est constituée par une multiplicité de points d'image disposés horizontalement les uns à côté des autres,
- le signal vidéo pour chaque point d'image possède un signal de consigne, auquel est superposé un signal de bruit,
comprenant les étapes suivantes :
- plusieurs grandeurs de mesure (1) sont sélectionnées sous la forme d'un nombre de points d'image, à partir du signal vidéo,
- les échantillons de mesure (1) sont soumis à un filtrage passe-haut, et
- pour chaque échantillon de mesure (2), un niveau de bruit propre est déterminé à partir du signal ayant subi le filtrage passe-haut,
- comme niveau de bruit actif, on utilise le plus petit des niveaux de bruit propres.

2. Procédé de détermination de niveau de bruit pour un signal vidéo, selon lequel
- le signal vidéo est constitué par une suite d'images vidéo,
- chaque image vidéo est constituée par une multiplicité de lignes vidéo disposées verticalement les unes au-dessous des autres,
- chaque ligne vidéo est constituée par une multiplicité de points d'image disposés horizontalement les uns à côté des autres,
- le signal vidéo pour chaque point d'image possède un signal de consigne, auquel est superposé un signal de bruit,
comprenant les étapes suivantes :
- plusieurs grandeurs de mesure (1) sont sélectionnées sous la forme d'un nombre de points d'image, à partir du signal vidéo,
- les échantillons de mesure (1) sont soumis à un filtrage passe-haut,
- pour chaque échantillon de mesure (2), un niveau de bruit propre est déterminé à partir du signal ayant subi le filtrage passe-haut,
- les niveaux de bruit les plus faibles sont sélectionnés à partir de ces niveaux de bruit propres, et
- comme niveau de bruit actif on utilise une valeur moyenne - éventuellement pondérée - des niveaux de bruit les plus faibles sélectionnés.

3. Procédé de détermination de niveau de bruit selon la revendication 1 ou 2, caractérisé en ce que l'échantillon de mesure (1) est formé de façon unidimensionnelle, et notamment que les points d'image de l'échantillon de mesure (1) sont disposés les uns à côté des autres.

4. Procédé de détermination de niveau de bruit selon la revendication 1 ou 2, caractérisé en ce que l'échantillon de mesure (1) est formé de façon bidimensionnelle, et notamment que les points d'image de l'échantillon de mesure (1) sont disposés les uns à côté des autres et les uns au-dessous des autres.

5. Procédé de détermination de niveau de bruit selon la revendication 2, caractérisé en ce qu'on détermine successivement dans le temps les niveaux de bruit propres, par exemple image par image, et qu'on soumet les niveaux de bruit propres à un filtrage passe-bas dans le temps.

6. Procédé de détermination de niveau de bruit selon les revendications 1 à 5, caractérisé en ce que le signal vidéo est traité dans un circuit de traitement conformément à une courbe caractéristique commandable et que le niveau de bruit ou le niveau de bruit effectif commande la courbe caractéristique.

7. Procédé de détermination de niveau de bruit selon l'une des revendications précédentes, caractérisé en ce que la détermination des niveaux de bruit s'effectue uniquement dans la partie active d'une image vidéo.

8. Procédé de détermination de niveau de bruit selon la revendication 2, caractérisé en ce que le niveau de bruit propre est déterminé par évaluation
- de l'amplitude différentielle maximale,
- par évaluation de la valeur absolue des amplitudes différentielles maximales,
- par évaluation de la somme absolue des amplitudes différentielles, ou
- par évaluation de la somme absolue des amplitudes différentielles élevées au carré.

9. Détecteur de signal vidéo pour un signal vidéo, selon lequel
- le signal vidéo est constitué par une suite d'images vidéo,
- chaque image vidéo est constituée par une multiplicité de lignes vidéo disposées verticalement les unes au-dessous des autres,
- chaque ligne vidéo est constituée par une multiplicité de points d'image disposés horizontalement les uns à côté des autres,
- le signal vidéo pour chaque point d'image possède un signal de consigne, auquel est superposé un signal de bruit,
présentant les caractéristiques suivantes :
- un filtre passe-haut pour réaliser le filtrage passe-haut du signal vidéo,
- un circuit de sélection branché en amont ou en aval du filtre passe-haut et servant à sélectionner au moins une sonde de mesure (1) sous la forme d'un nombre de points d'image, et
- un circuit d'évaluation, auquel le signal de mesure (1) filtré selon le filtrage passe-haut est envoyé pour la détermination du niveau de bruit, le circuit d'évaluation comportant un comparateur (15) pour déterminer la sonde de mesure (1) possédant le niveau de bruit le plus faible.

10. Détecteur de niveau de bruit selon la revendication 9, caractérisé en ce que le circuit d'évaluation possède un élément de sommation (12) pour former la somme des signaux vidéo, ayant subi le filtrage passe-haut, des points d'image de l'échantillon de mesure (1).

11. Détecteur de niveau de bruit selon la revendication 9 ou 10, caractérisé en ce qu'une cadence de mesure (CLK₂) et, pour chaque cadence de mesure (CLK₂), un nouvel échantillon de mesure (1) sont envoyés au circuit d'évaluation.

12. Détecteur de niveau de bruit selon l'une des revendications 9 à 11, caractérisé en ce qu'un dispositif de formation de valeur absolue (11) est branché en aval du filtre passe-haut.

13. Détecteur de niveau de bruit selon l'une des revendications 9 à 12, caractérisé en ce que le filtre passe-haut comporte un circuit de retardement (9) et un noeud de sommation (8), qui est branché en aval du circuit de retardement (9) et auquel le signal vidéo inversé non retardé est également envoyé en plus du signal vidéo retardé.

14. Détecteur de niveau de bruit selon l'une des revendications 9 à 13, caractérisé en ce qu'un filtre passe-bas est branché en aval du circuit d'évaluation.

15. Détecteur de niveau de bruit selon la revendication 14, caractérisé en ce
- que le filtre passe-bas possède un élément de mémoire commandé de façon cadencée (21),
- qu'un premier amplificateur (19) possédant un premier facteur d'amplification (α) compris entre zéro et un est disposé entre le circuit d'évaluation et l'élément de mémoire (21),
- que le signal de sortie de l'élément de mémoire (21) est envoyé à un second amplificateur (22) possédant un second facteur d'amplification (β) complémentaire du premier facteur d'amplification (α), et
- que les signaux de sortie des amplificateurs (19,22) sont envoyés à l'élément de mémoire (21) en tant que signal d'entrée.

16. Détecteur de niveau de bruit selon l'une des revendications 9 à 15, caractérisé en ce
- que le niveau de bruit ou le niveau de bruit effectif est envoyé à un circuit de traitement du signal vidéo,
- que le circuit de traitement possède une courbe caractéristique commandable, et
- que le niveau de bruit ou le niveau de bruit effectif commande la courbe caractéristique.
